(19) Europäisches Patentamt
European Patent Office
Office européen des brevets

(11) **EP 2 041 897 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(21) Anmeldenummer: **06807480.6**

(22) Anmeldetag: **23.10.2006**

(51) Int Cl.:
*H04B 17/00* (2006.01)        *H01Q 3/26* (2006.01)

(86) Internationale Anmeldenummer:
**PCT/EP2006/067673**

(87) Internationale Veröffentlichungsnummer:
**WO 2007/060069 (31.05.2007 Gazette 2007/22)**

(54) **VERFAHREN UND ANORDNUNG ZUR KALIBRIERUNG VON SENDEPFADEN EINES ANTENNENSYSTEMS**

METHOD AND ARRANGEMENT FOR CALIBRATING TRANSMIT PATHS OF AN ANTENNA ARRAY

PROCÉDÉ ET DISPOSITIF POUR ÉTALONNER LES VOIES D'ÉMISSION D'UN RÉSEAU D'ANTENNES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.11.2005 EP 05025922**

(43) Veröffentlichungstag der Anmeldung:
**01.04.2009 Patentblatt 2009/14**

(73) Patentinhaber: **Nokia Siemens Networks GmbH & Co. KG**
**81541 München (DE)**

(72) Erfinder:
• **HASSLER, Bernd**
**89171 Illerkirchberg (DE)**

• **HÖCK, Georg**
**89081 Ulm-lehr (DE)**

(56) Entgegenhaltungen:
EP-A- 1 003 310      EP-A- 1 178 562
EP-A- 1 227 542      WO-A-97/00543

• **NISHIMORI K ET AL: "A new calibration method of adaptive array for TDD systems" ANTENNAS AND PROPAGATION SOCIETY, 1999. IEEE INTERNATIONAL SYMPOSIUM 1999 ORLANDO, FL, USA 11-16 JULY 1999, PISCATAWAY, NJ, USA,IEEE, US, Bd. 2, 11. Juli 1999 (1999-07-11), Seiten 1444-1447, XP010348407 ISBN: 0-7803-5639-X**

**Beschreibung**

Die Erfindung betrifft ein Verfahren und eine Anordnung zur Kalibrierung von Sendepfaden, die zur Ansteuerung von Einzelantennen eines Antennensystems, insbesondere eines "Smart"-Antennensystems, vorgesehen sind.

Antennensysteme, bzw. SMART-Antennensysteme, werden eingesetzt, um eine teilnehmerspezifische bzw. teilnehmerindividuelle Formung einer Antennenabstrahlungscharakteristik vorzunehmen.

Dadurch ist es beispielsweise in einem Mobilfunksystem möglich, eine Reduzierung von so genannten "Intrazell"-Interferenzen innerhalb einer betrachteten Funkzelle zu erreichen. Durch die Strahlungsdiagrammformung ist es auch möglich, funkzellenübergreifende Interferenzen, die als "Interzell"-Interferenzen bezeichnet werden, zu reduzieren.

Ein Smart-Antennensystem beinhaltet dabei neben einer Vielzahl an Einzelantennen auch eine Vielzahl an Sendepfaden, wobei jeder Einzelantenne jeweils ein Sendepfad zur Antennen-Ansteuerung zugeordnet ist. Bei einem Smart-Antennensystem gelangt ein betrachtetes Teilnehmersignal mit jeweils unterschiedlichen Phasenlagen und Amplitudenwerten an jeweils ausgewählte Einzelantennen des Systems zur Abstrahlung. Die Einstellung der Strahlungscharakteristik sowie deren räumliche Ausrichtung werden durch Auswahl der Phasenlagen bzw. der Amplitudenwerte ermöglicht.

Prinzipiell können zwei Methoden zur Formung einer Antennencharakteristik unterscheiden werden.

Bei einer ersten Methode erfolgt eine Aufteilung eines hochfrequenten Teilnehmer-Sendesignals auf die einzelnen Antennen. Dazu wird beispielsweise eine so genannte "Butler-Matrix" verwendet, die neben der Aufteilung den einzelnen Signalkomponenten, die für die jeweiligen Einzelantennen vorgesehen sind, jeweils unterschiedliche Phasenlagen zuordnet.

Bei einer zweiten Methode wird bereits im Basisband an einem digitalen Teilnehmersignal eine Vorverarbeitung für die jeweiligen einzelnen Antennen vorgenommen. Dabei wird beispielsweise das bekannte "Switched-Beamforming" oder das "Eigen-Beamforming" angewendet.

Bei den "Beamforming"-Methoden, die eine Signalvorverarbeitung im digitalen Basisband voraussetzen, ist es bei einem Smart-Antennensystem notwendig, zwischen den Sendepfaden bekannte Phasenbeziehungen, Laufzeitbeziehungen und Amplitudenbeziehungen zu haben. Dies ist die Voraussetzung für eine genau gerichtete Strahlungsdiagrammformung.

Sind diese Beziehungen nicht im entsprechenden Umfang und Genauigkeit bekannt, wird eine gewünschte Antennencharakteristik in einer unvorhersehbaren Art und Weise verzerrt. Dies führt zu einer Verringerung der Funkzellen-Kapazität bzw. zu einer Verschlechterung der Intrazell-Interferenz.

Somit ist es notwendig, bei einem SMART-Antennensystem eine Kalibrierung der Sendepfade bzw. einen Abgleich zwischen den Sendepfaden vorzunehmen.

Bekannte Verfahren zur Kalibration verwenden dazu Vorrichtungen, mit denen vor Inbetriebnahme des SMART-Antennensystems ein Testsignal einen ausgewählten Sendepfad durchläuft. Aufgrund einer bestimmten Laufzeit des Testsignals erfolgt dann ein auf eine Referenz bezogener Laufzeitabgleich.

Derartige Kalibrationsverfahren sind jedoch nur für einen einmaligen, quasi statischen Systemabgleich verwendbar. Jedoch werden sich zeitlich ändernde Einflüsse, wie z.B. NISHIMORI K ET AL: "A new calibration method of adaptive array for TDD systems" ANTENNAS AND PROPAGATION SOCIETY, 1999. IEEE INTERNATIONAL SYMPOSIUM 1999 ORLANDO, FL, USA 11-16 JULY 1999, PISCATAWAY, NJ, USA,IEEE, US, Bd. 2, 11. Juli 1999 (1999-07-11), Seiten 1444-1447, ISBN: 0-7803-5639-X offenbart ein Verfahren zur Kalibrierung von Sendepfaden, die zur Ansteuerung von Einzelantennen eines Antennensystems verwendet werden.

Die Patentanmeldung EP 1 003 310 A1 offenbart ein Verfahren zur Kalibrierung von Antennensendepfaden unter Verwendung von Korrelationsverfahren.

Die Patentanmeldung EP 1 178 562 A1 offenbart ein Verfahren zur Kalibrierung von Antennensendepfaden, bei dem die empfangenden Antennenabschnitte unter Verwendung von generierten Korrekturfaktoren eingestellt werden.

Es ist daher Aufgabe der vorliegenden Erfindung, ein Verfahren und eine Anordnung zur Kalibrierung eines Antennensystems anzugeben, mit dem bei geringem zusätzlichen Aufwand und während des Betriebs ein Abgleich eines Antennensystem ermöglicht wird. Dabei soll insbesondere eine Kalibrierung eines betriebenen SMART-Antennensystems ermöglicht werden.

Diese Aufgabe wird durch die Merkmale des Patentanspruchs 1 und des Patentanspruchs 10 gelöst. Vorteilhafte Weiterbildungen sind in den jeweiligen Unteransprüchen angegeben.

Beim erfindungsgemäßen Verfahren zur Kalibrierung von Sendepfaden, die zur Ansteuerung von Einzelantennen eines Antennensystems verwendet werden, wird in jedem Sendepfad ein zugeführtes digitales Basisband-Sendesignal in ein trägerfrequentes Sendesignal umgewandelt. Zur Kalibrierung wird ein einzelner Sendepfad ausgewählt, dessen zugeordnetes trägerfrequentes Sendesignal anteilig ausgekoppelt wird.

Das anteilig ausgekoppelte Sendesignal wird über einen Empfangspfad in ein digitales Basisband-Empfangssignal umgewandelt. Das Empfangssignal wird mit dem Sendesignal korreliert, um für den ausgewählten Sendepfad ein auf einen Referenz-Sendepfad bezogenes Amplitudenverhältnis, eine Phasendifferenz und eine Laufzeitdifferenz zu ermitteln, wobei am Korrelationsmaximum für den ausgewählten Signalpfad eine komplexe Amplitude berechnet wird.

Bei der Kalibrierung wird die Laufzeitdifferenz zur Einstellung eines Laufzeitglieds verwendet, wobei das Laufzeitglied dem ausgewählten Sendepfad zugeordnet ist. Das Amplitudenverhältnis und die Phasendifferenz wird zur Einstellung eines Multiplikators verwendet, wobei der Multiplikator dem ausgewählten Sendepfad zugeordnet ist.

Diese Vorgehensweise wird für alle weiteren Sendepfade wiederholt, so dass in allen Sendepfaden gleiche Übertragungsverhältnisse vorliegen. Die in den Sendepfaden übermittelten Signale entsprechen sich nach erfolgter Kalibrierung in ihren Amplituden, in ihren Laufzeitwerten und in ihren Phasenwerten.

Durch die vorliegende Erfindung wird eine Kalibrierung während des Betriebs eines Antennensystems ermöglicht, so dass auch dynamische Einflüsse auf das System, wie beispielsweise Temperatur, Alterung, usw., stets abgeglichen werden können.

Die Kalibrierung erfolgt während des Betriebs und durch die Verwendung von Teilnehmersignalen ohne zusätzliche Störungen.

Durch die vorteilhafte Verwendung von Teilnehmersignalen werden keine zusätzlichen Funkübertragungsressourcen zur Durchführung der Kalibrierung gebunden bzw. benötigt.

Eine mit einem großen Aufwand verbundene Erzeugung und Testsignalen entfällt vorteilhaft.

Durch die vorliegende Erfindung wird auch während des Betriebs eine Kalibrierung ermöglicht. Durch die hochgenaue Formung und Ausrichtung der Strahlungsdiagramme werden stets optimale Übertragungsbedingungen bei minimalen Interferenzen innerhalb eines Funksystems ermöglicht.

Die Erfindung ist insbesondere für so genannte "Tower-Mounted-Radio" Anwendungen geeignet, bei denen eine Basisband-Signalverarbeitung antennennah und damit im allgemeinen exponiert an einem Sendemast erfolgt. Zur Signalverarbeitung verwendete Schaltungskomponenten sind dann starken Temperatur- und Alterungsprozessen bzw. Umwelteinflüssen ausgesetzt, die mit Hilfe der Erfindung jedoch ohne Einfluss auf das Antennensystem bleiben.

Die Erfindung ist insbesondere für eine Downlink-Kalibrierung vorteilhaft und eignet sich bevorzugt für Basisstationen, die Funkübertragungen gemäß dem Standard UMTS-FDD durchführen.

Durch die Erfindung wird auch während des Antennen-Betriebs eine optimierte Reduzierung von "Intrazell"-Interferenzen realisiert.

Nachfolgend wird die Erfindung anhand einer Zeichnung näher erläutert. Dabei zeigt:

FIG 1    als Blockschaltbild eine erfindungsgemäße Anordnung zur Kalibrierung,

FIG 2    bezogen auf FIG 1 eine Ausgestaltung eines Laufzeitakkumulators,

FIG 3    bezogen auf FIG 1 eine Ausgestaltung eines Phasenakkumulators, und

FIG 4    eine Architektur eines SMART-Antennensystems in einer prinzipiellen Darstellung.

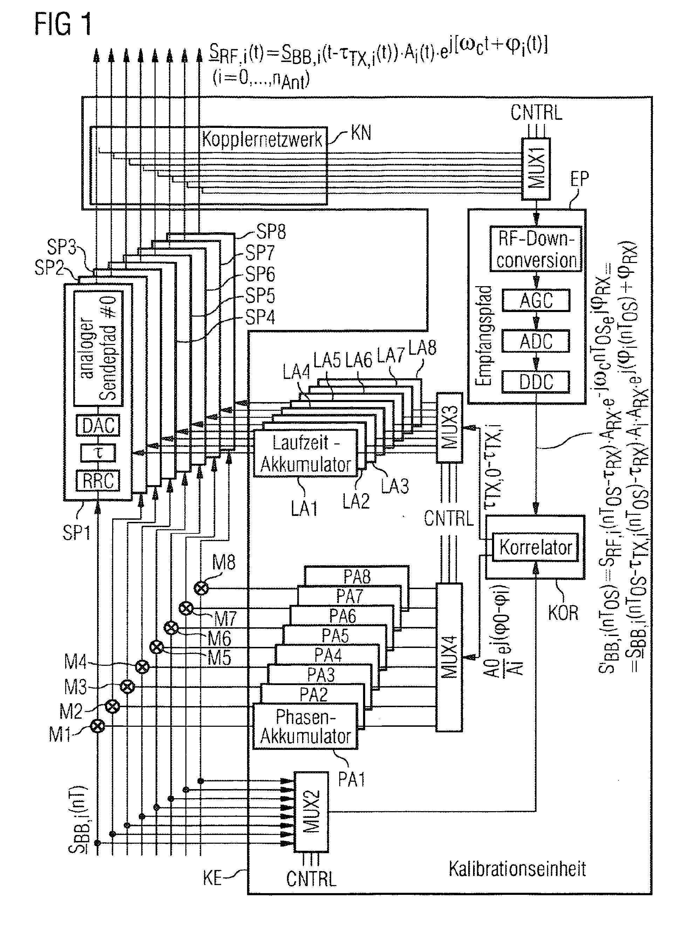

FIG 1 zeigt als Blockschaltbild eine erfindungsgemäße Anordnung zur Kalibrierung von Sendepfaden SP1 bis SP8 eines Antennensystems.

Dabei sind die Sendepfade SP1 bis SP8 des Antennensystems hinsichtlich ihrer Phasenbeziehungen, Laufzeitbeziehungen und Amplitudenbeziehungen untereinander zu kalibrieren.

Die Sendepfade SP1 bis SP8 des Antennensystems sind in einer bevorzugten Ausführungsform Teil eines SMART-Antennensystems.

Jeder einzelne der Sendepfade SP1 bis SP8 beinhaltet dabei beispielsweise ein Kanalfilter RRC, welcher beispielsweise als so genannter "Root Raised Cosine Filter" ausgebildet ist, ein einstellbares Verzögerungsglied τ, einen Digital-AnalogWandler DAC und einen nachgeschalteten analogen Sendepfad.

In den Sendepfaden SP1 bis SP8 sind jedoch auch andere Konfigurationen bzw. Komponenten möglich, solange jeder einzelne Sendepfad zur Ansteuerung von zumindest einer Antenne verwendet wird.

Stellvertretend für alle anderen Sendepfade SP2 bis SP8 ist hier im ersten Sendepfad SP1 der analoge Sendepfad mit der Nummer "#1" im Detail dargestellt.

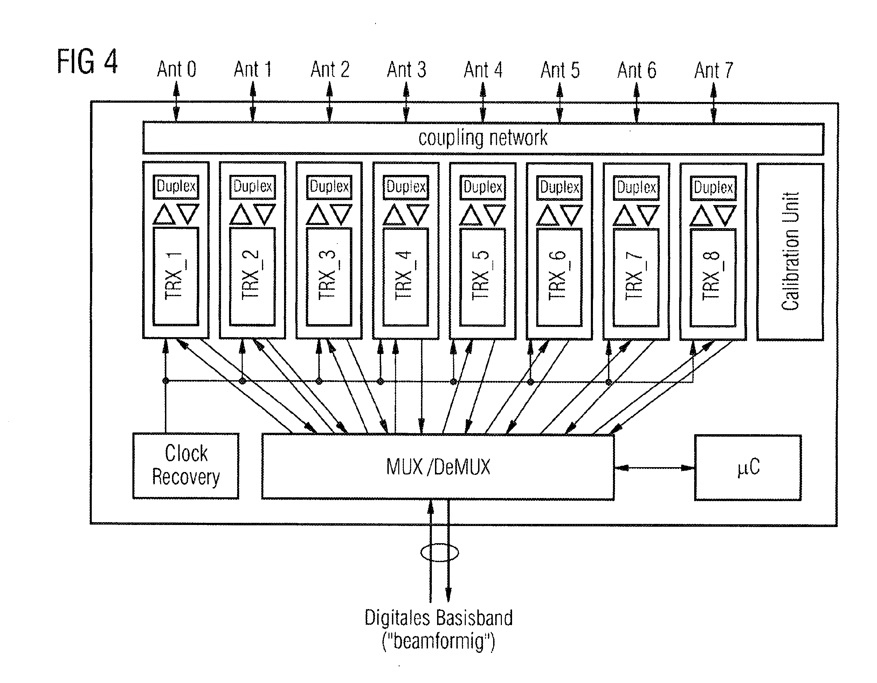

An die Sendepfade SP1 bis SP8 werden jeweilige digitale Basisbandsignale $\underline{S}_{BB,i}(nT)$ angeschaltet, die in diesem Ausführungsbeispiel in hochfrequente Sendesignale $\underline{S}_{RF,i}(t)$ umgeformt werden. Die hochfrequenten Sendesignale $\underline{S}_{RF,i}(t)$ gelangen dann, wie später in FIG 4 beschrieben, an ein hier nicht dargestelltes Smart-Antennen-System.

Jeweilige komplexe Signale werden "unterstrichen" dargestellt, wie beispielsweise die digitalen Basisbandsignale $\underline{S}_{BB,i}(nT)$.

Die Einspeisung der Basisbandsignale $\underline{S}_{BB,i}(nT)$ bzw. deren Zuordnung zu den einzelnen Sendepfaden SP1 bis SP8 erfolgt beispielsweise im Rahmen einer Ansteuerung eines SMART-Antennen-Systems. Ein Beispiel für eine SMART-Antennenanordnung bzw. für ein SMART-Antennensystem ist in der später dargestellten FIG 4 gezeigt.

Jeder Sendepfad SP1 bis SP8 beinhaltet außerdem jeweils einen komplexen Multiplikator M1 bis M8, der in jedem Sendepfad den Komponenten zur Signalverarbeitung (hier beginnend mit dem Kanalfilter RRC) vorgeschaltet ist.

Mit Hilfe eines Koppler-Netzwerks KN, der einer Kalibrierungseinheit KE zugeodnet ist, werden die hochfrequenten Sendesignale $\underline{S}_{RF,i}(t)$ ausgekoppelt und einem ersten Multiplexer MUX1 zugeführt.

Mit Hilfe von Steuersignalen CNTRL, die ebenfalls dem ersten Multiplexer MUX1 zugeführt sind, wird aus den hochfrequenten Sendesignalen $\underline{S}_{RF,i}(t)$ ein Signal eines zugeordneten, betrachteten Sendepfads ausgewählt. Das jeweilige ausgewählte Signal gelangt als Eingangssignal an einen Empfangspfad EP der Kalibrierungseinheit KE.

Die hier dargestellte Realisierungsmöglichkeit des Empfangspfades EP beinhaltet eine als "RF-Down-Conversion" bezeichnete Umsetz-Einrichtung, mit der eine Umsetzung bzw. Wandlung des ausgewählten hochfrequenten Sendesignals $\underline{S}_{RF,i}(t)$ in einen Zwischenfrequenz-Bereich erfolgt.

Das in den Zwischenfrequenz-Bereich umgesetzte Signal wird über einen automatischen Regel-Verstärker AGC einem Analog-Digital-Wandler ADC zur Digitalisierung zugeführt.

Zur Umsetzung ins Basisband wird das digitalisierte Signal dann einem digitalen Abwärts-Umsetzer DDC ("Digital Down Converter) zugeführt.

Für den beschriebenen Empfangspfad sind auch alternative Empfängerarchitekturen wie beispielsweise Direct Conversion einsetzbar.

Zusammengefasst wird aus einem ausgewählten hochfrequenten Sendesignal $\underline{S}_{RF,i}(t)$ eines betrachteten Signalpfads durch eine Signal-Rückwandlung ein digitales Empfangssignal $\underline{S}'_{BB,i}(nT_{os})$ im Basisband gebildet.

Das so gewonnene digitale Basisbandsignal steht in der Regel mit einer höheren Abtastrate ($1/T_{os}$) als das ursprüngliche Basisbandsignal ($1/T$) zur Verfügung, wobei die Abkürzung "OS" für "Oversampling" steht. Dabei ist "T" ein ganzzahliges Vielfaches von "$T_{os}$".

Dieses durch Signal-Rückwandlung gebildete Empfangssignal $\underline{S}'_{BB,i}(nT_{OS})$ gelangt mit dem zuordenbaren Basisbandsignal $\underline{S}_{BB,i}(nT)$ des betrachteten Signalpfads an einen Korrelator KOR, der die beiden durch Korrelation miteinander vergleicht. Der Korrelator KOR ist ebenfalls Bestandteil der Kalibrierungseinheit KE.

Die Auswahl des betrachteten Signalpfads bzw. die Auswahl des zugeordneten Basisbandsignals $\underline{S}_{BB,i}(nT)$ wird auch mit Hilfe eines zweiten Multiplexers MUX2 durchgeführt, der ebenfalls durch die Steuersignale CNTRL gesteuert betrieben wird.

Der Korrelator KOR führt eine komplexe Korrelation durch. Mit seiner Hilfe werden spezifische Laufzeitbeziehungen, Phasenbeziehungen und Amplitudenbeziehungen des jeweils betrachteten Sendepfads ermittelt.

Die Kalibrierungseinheit KE weist einen dritten Multiplexer MUX3 auf, der Ausgangssignale des Korrelators KOR an einen von insgesamt acht Laufzeit-Akkumulatoren LA1 bis LA8 weitermeldet. Dabei ist jedem einzelnen der Sendepfade SP1 bis SP8 jeweils einer der Laufzeit-Akkumulatoren LA1 bis LA8 zugeordnet. Durch die Laufzeitakkumulatoren LA1 bis LA8 erfolgt eine Integration von Laufzeitfehlern für den jeweils betrachteten Sendepfad.

Zum Ausgleich der Laufzeitfehler ist jeder der Laufzeit-Akkumulatoren LA1 bis LA8 mit dem einstellbaren Verzögerungsglied τ des ihm jeweils zugeordneten Sendepfads SP1 bis SP8 verbunden.

Die Kalibrierungseinheit KE weist einen vierten Multiplexer MUX4 auf, der Ausgangssignale des Korrelators KOR an einen von insgesamt acht Phasen-Akkumulatoren PA1 bis PA8 weitermeldet. Dabei ist jedem einzelnen der Sendepfade SP1 bis SP8 jeweils einer der Phasen-Akkumulatoren PA1 bis PA8 zugeordnet. Durch die Phasen-Akkumulatoren PA1 bis PA8 erfolgt eine Integration von Phasenfehlern für den jeweils betrachteten Sendepfad.

Zum Ausgleich der Phasenfehler ist jeder der Phasen-Akkumulatoren PA1 bis PA8 mit dem Multiplikator M1 bis M8 des ihm jeweils zugeordneten Sendepfads SP1 bis SP8 verbunden.

Um für alle Sendepfade SP1 bis SP8 ein identisches Übertragungsverhalten zu erreichen, ist für alle Sendepfade bzw. Antennen folgender Abgleich durchzuführen:

$$\tau_{TX,i} = \tau_{TX,0}$$

$$A_i = A_0$$

$$\varphi_i = \varphi_0$$

mit:

i       als Laufvariablen, mit i = 0 ... $n_{ant}$-1,

$n_{ant}$       als Anzahl der Sendepfade bzw. als Anzahl an Einzelantennen der in FIG 4 beispielhaft dargestellten SMART-

Antenne,

$\tau_{TX,0}$ als Signallaufzeit innerhalb eines als Referenz verwendeten Sendepfads - hier des Sendepfads SP1,

$\tau_{TX,i}$ als Signallaufzeit innerhalb eines betrachteten Sendepfads,

$A_i$ als Signalamplitude innerhalb eines betrachteten Sendepfads,

$A_0$ als Signalamplitude innerhalb des Referenz-Sendepfads,

$\varphi_i$ als Signalphase innerhalb eines betrachteten Sendepfads, und mit

$\varphi_0$ als Signalphase innerhalb eines Referenz-Sendepfads.

Zur Kalibrierung wird ein betrachteter Sendepfades i mit Hilfe des ersten Multiplexers MUX1 und mit Hilfe des zweiten Multiplexers MUX2 ausgewählt.

Eine komplexe Korrelation des gesendeten Basisband-Signals $\underline{S}_{BB,i}(nT)$ mit dem ins komplexe Basisband zurücktransformierten zugehörigen Sendesignal $\underline{S}'_{BB,i}(nT_{os})$ wird gemäß folgender Formel ausgeführt:

$$\underline{C}_i(m) = \frac{\sum_{n=0}^{N_{corr}-1} \underline{S}_{BB,i,n} \cdot \underline{S'}^{*}_{BB,i,m+T'_{os} \cdot n}}{\sum_{n=0}^{N_{corr}-1} \underline{S}_{BB,i,n} \cdot \underline{S}^{*}_{BB,i,n}}$$

mit:

$N_{Corr}$ als Korrelationslänge,

$T$ als Bitdauer,

$T_{os}$ als Bitdauer des (im allgemeinen überabgetasteten) Empfangssignals des Kalibrationsempfängers,

$\underline{S}_{BBi,n}$ als digitales Basisbandsignal eines betrachteten Sendepfads i,

$\underline{S}'^{*}_{BBi,m}$ als digitales, konjugiert komplexes Empfangssignal im Basisband, das durch Umsetzung des Sendesignals des i-ten Sendepfads in das Basisband gebildet wird,

$\underline{S}^{*}_{BBi,n}$ als digitales, konjugiert komplexes Basisbandsignal des betrachteten Sendepfads i, und mit

$m$ als Korrelationsindex.

Dabei wird angenommen, dass die Bitdauer T ein ganzzahliges Vielfaches der Bitdauer $T_{os}$ ist.

Durch Bestimmung der Lage eines Korrelationsmaximums wird eine Gesamtlaufzeit $(\tau_{RX}+\tau_{TX,i})$ ermittelt, mit:

$\tau_{RX}$ als Signallaufzeit zwischen dem Koppler-Netzwerk KN, der zur Signalauskopplung verwendet wird, und dem Korrelator KOR und mit

$\tau_{TX,i}$ als Signallaufzeit des Sendepfads, d.h. als Signallaufzeit zwischen den Anschlusspunkten des zweiten Multiplexer MUX2 einerseits und dem Koppler-Netzwerk KN andererseits.

Dabei wird angenommen, dass sich der Wert der Signallaufzeit $\tau_{RX}$ während eines Kalibrierungsdurchgangs nur vernachlässigbar ändert, so dass sich eine auf den Referenz-Signalpfad bezogene gesuchte Laufzeitdifferenz $(\tau_{TX,0} - \tau_{TX,i})$ bestimmen lässt.

Die Laufzeitdifferenz $\tau_{TX,0} - \tau_{TX,i}$ des zugeordneten betrachteten Sendepfads i wird in einen der Laufzeitakkumulatoren LA1 bis LA8 eingespeist, dessen Ausgangssignal unmittelbar zur Korrektur der Signallaufzeit über das jeweils zugeordnete Laufzeitglied $\tau$ verwendet wird. Dabei ist jedem der Sendepfade i jeweils ein Laufzeitakkumulator zum Abgleich zugeordnet.

Jeder Laufzeitakkumulator ist als Integrator ausgebildet, so dass innerhalb des vorstehend beschriebenen Regelkreises eine gleichbleibend vorhandene Regelabweichung durch die Integration zu "Null" wird.

Somit ergeben sich identische, vom Signalpfad unabhängige Laufzeiten $l_{TX,i} = T_{TX0}$ für alle $i = 0...n_{ant}-1$.

Mittels eines Koeffizienten $\alpha$, der im Bereich $0 < \alpha \leq 1$ einstellbar ist, kann eine Variation einer Regelbandbreite ermöglicht werden. Dabei entspricht $\alpha=1$ einer ungefilterten Regelung.

Am Korrelationsmaximum wird für den Signalpfad eine komplexe Amplitude unmittelbar bestimmt durch:

$$\max\{\underline{C}_i(m)\} = A_i \cdot A_{RX} \cdot e^{j(\varphi_i+\varphi_{RX})}$$

mit:

A$_i$    als Signalamplitude innerhalb des betrachteten Sendepfads,

A$_{RX}$    als Signalamplitude für den Empfangspfad bzw. für den Bereich zwischen den Auskoppelpunkten des Signals durch das Koppler-Netzwerk KN einerseits und dem Korrelator KOR andererseits,

$\varphi_i$    als Signalphase innerhalb des betrachteten Sendepfads, und mit

$\varphi_{RX}$    als Signalphase für den Empfangspfad bzw. für den Bereich zwischen den Auskoppelpunkten des Signals durch das Koppler-Netzwerk KN einerseits und dem Korrelator KOR andererseits.

Unter der Annahme, dass sich die Signalamplitude A$_{RX}$ und die Signalphase $\varphi_{RX}$ während eines Kalibrierungsdurchgangs nur vernachlässigbar ändern, folgt:

$$\frac{\max\{\underline{C}_0(m)\}}{\max\{\underline{C}_i(m)\}} = \frac{A_0}{A_i} \cdot e^{j(\varphi_0 - \varphi_i)}$$

Der Wert des berechneten Verhältnisses wird in einen der Phasen-Akkumulatoren PA1 bis PA8 eingespeist, dessen Ausgangssignal unmittelbar zur Korrektur der komplexen Amplitude über den jeweils zugeordneten Multiplikator M1 bis M8 verwendet wird. Dabei ist jedem betrachteten Sendepfad i jeweils ein komplexer Multiplikator zum Abgleich zugeordnet.

Jeder Phasen-Akkumulator PA1 bis PA8 ist als Integrator für die Phase und für die logarithmierte Amplitude innerhalb des beschriebenen Regelkreises ausgebildet. Durch die Integration entfällt vorteilhaft eine gleichbleibend vorhandene Regelabweichung innerhalb des beschriebenen Regelkreises.

Es ergeben sich näherungsweise identische, vom Signalpfad unabhängige, komplexe Übertragungsfunktionen der einzelnen Sendepfade mit A$_i$ = A$_0$ und mit $\varphi_i$ = $\varphi_0$ für alle Sendepfade i = 0... $_{nant}$-1.

Mittels eines Koeffizienten $\alpha$, der im Bereich 0 < $\alpha \le$ 1 einstellbar ist, kann eine Variation einer Regelbandbreite ermöglicht werden. Dabei entspricht $\alpha$=1 einer ungefilterten Regelung.

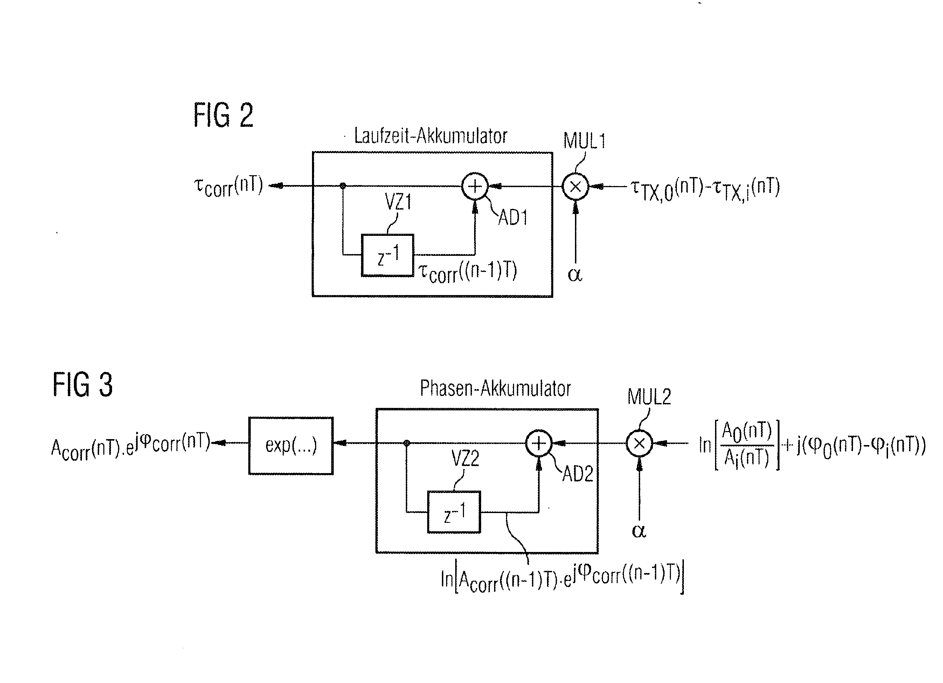

FIG 2 zeigt bezogen auf FIG 1 eine Ausgestaltung eines Laufzeit-Akkumulators.

Die gebildete Laufzeitdifferenz $\tau_{TX,0}$(nT)-$\tau_{TX,i}$(nT) wird über einen Multiplikator MUL1, der zur Multiplikation mit dem Koeffizienten $\alpha$ vorgesehen ist, an einen Addierer AD1 gebracht. Der Addierer AD1 ist über ein Verzögerungsglied VZ1 zurückgekoppelt. Das Ausgangssignal des Addierers AD1 wird als Wert $\tau_{corr}$(nT) verwendet.

Der Laufzeit-Akkumulator wird im Rahmen einer ersten und eher groben Korrektur verwendet.

FIG 3 zeigt bezogen auf FIG 1 eine Ausgestaltung eines Phasenakkumulators.

Das Verhältnis der Signalamplituden A$_0$(nT) und A$_i$(nT) sowie die Signalphasen $\varphi_0$(nT) und $\varphi_i$(nT) werden über einen Multiplikator MUL2, der zur Multiplikation mit dem Koeffizienten $\alpha$ vorgesehen ist, an einen Addierer AD2 gebracht. Der Addierer AD2 ist über ein Verzögerungsglied VZ2 zurückgekoppelt.

Das Ausgangssignal des Addierers AD2 wird nach Durchführung einer weiteren Exponentialrechnung wie folgt als Korrekturwert verwendet: A$_{corr}$(nT) e$^{j\varphi corr(nT)}$

Der Phasen-Akkumulator wird im Rahmen einer eher feinen Korrektur verwendet.

FIG 4 zeigt eine Architektur eines SMART-Antennensystems in einer prinzipiellen Darstellung.

Das SMART-Antennensystem weist acht Antennen ANT0 bis ANT7, acht Sende-/Empfangspfade TRX_1 bis TRX_8 mit jeweiligen Sende-/Empfangsverstärkern und mit Duplexern "Duplex", ein als "coupling network" bezeichnetes Koppelnetzwerk, ein als "calibration unit" bezeichnete Kalibrierungseinrichtung, einen als "MUX/DeMUX" bezeichneten Multiplexer bzw. Demultiplexer, eine als "Clock Recovery" bezeichnete Takteinrichtung und einen als "$\mu$C" bezeichneten Mikro-Kontroller auf.

In Senderichtung gelangen digitale Basisbandsignale über den Multiplexer an jeweilige Sende-/Empfangspfade TRX_1 bis TRX_8.

In jedem der Sende-/Empfangspfade TRX_1 bis TRX_8 erfolgt, wie in FIG 1 erläutert, durch Filterung, Digital-Analog-Wandlung und durch Verstärkung des zugeführten Basisbandsignals eine Signalumwandlung.

Mit Hilfe des Koppelnetzwerks wird ein betrachtetes Ausgangssignal eines Sende-/Empfangspfads an zumindest eine der Antennen ANT0 bis ANT7 zur Abstrahlung derart angeschaltet, dass eine Strahlungsdiagrammformung erfolgt.

Die Kalibrierungseinrichtung weist die in FIG 1 beschriebenen Komponenten zur Kalibrierung auf.

Die Takteinrichtung erzeugt bzw. regeneriert in Abhängigkeit von einem, hier nicht dargestellten, Systemtakt ein Taktsignal für die Sende-/Empfangspfade TRX_1 bis TRX_8.

Der Mikro-Kontroller μC wird zur Steuerung der Systemkomponenten verwendet.

**Patentansprüche**

1. Verfahren zur Kalibrierung von Sendepfaden (SP1-SP8, TRX_1-TRX_8), die zur Ansteuerung von Einzelantennen (ANT0-ANT7) eines Antennensystems verwendet werden,

   - bei dem in jedem Sendepfad (SP1-SP8, TRX_1-TRX_8) ein zugeführtes digitales Basisband-Sendesignal in ein trägerfrequentes Sendesignal umgewandelt wird,
   - bei dem zur Kalibrierung ein einzelner Sendepfad (SP1-SP8, TRX_1-TRX_8) ausgewählt wird, dessen zugeordnetes trägerfrequentes Sendesignal anteilig ausgekoppelt wird,
   - bei dem das anteilig ausgekoppelte Sendesignal über einen Empfangspfad (EP) in ein digitales Basisband-Empfangs-signal umgewandelt wird,
   - bei dem das Empfangssignal mit dem Sendesignal korreliert wird, um für den ausgewählten Sendepfad (SP1-SP8, TRX_1-TRX_8) ein auf einen Referenz-Sendepfad bezogenes Amplitudenverhältnis, eine Phasendifferenz und eine Laufzeitdifferenz zu ermitteln, wobei am Korrelationsmaximum für den ausgewählten Signalpfad eine komplexe Amplitude berechnet wird,
   - bei dem zur Kalibrierung die Laufzeitdifferenz zur Einstellung eines Laufzeitglieds, das dem ausgewählten Sendepfad zugeordnet ist, verwendet wird, und
   - bei dem zur Kalibrierung das Amplitudenverhältnis und die Phasendifferenz zur Einstellung eines Multiplikators (M1-M8, MUL1, MUL2), der dem ausgewählten Sendepfad zugeordnet ist, verwendet wird.

2. Verfahren nach Anspruch 1,

   - bei dem ein Koppler-Netzwerk (KN) verwendet wird, um anteilige Sendesignale aus allen Sendepfaden (SP1-SP8, TRX_1-TRX_8) auszukoppeln, und
   - bei dem ein erster Multiplexer (MUX1) zur Auswahl des Sendepfads (SP1-SP8, TRX_1-TRX_8) verwendet wird, wobei der erste Multiplexer (MUX1) das anteilige Sendesignal des ausgewählten Sendepfads (SP1-SP8, TRX_1-TRX_8) an den Empfangspfad (EP) weiterleitet.

3. Verfahren nach Anspruch 1 oder 2, bei dem im Empfangspfad (EP) das anteilige Sendesignal des ausgewählten Sendepfads (SP1-SP8, TRX_1-TRX_8) in das Basisband umgesetzt und analog-digital-gewandelt wird, um das digitale Basisband-Empfangssignal zu bilden.

4. Verfahren nach einem der vorhergehenden Ansprüche, bei dem eine komplexe Korrelation des gesendeten Basis-band-Signals $\underline{S}_{BB,i}(nT)$ mit dem ins komplexe Basisband zurücktransformierten zugehörigen Sendesignal $\underline{S}'_{BB,i}(nT_{os})$ gemäß folgender Formel ausgeführt wird:

$$\underline{C}_i(m) = \frac{\sum_{n=0}^{N_{corr}-1} \underline{S}_{BB,i,n} \cdot \underline{S}'^*_{BB,i,m+T/T_{os} \cdot n}}{\sum_{n=0}^{N_{corr}-1} \underline{S}_{BB,i,n} \cdot \underline{S}^*_{BB,i,n}}$$

mit:

N_{corr} als Korrelationslänge,
T als Bitdauer,
$T_{os}$ als Bitdauer des mit einem Offset behafteten Empfangssignals, (dieses Signal liegt im Allgemeinen als überabgetastetes Signal vor),
$\underline{S}_{BBi,n}$ als digitales Basisbandsignal eines betrachteten Sendepfads (SP1-SP8, TRX_1-TRX_8) i,
$\underline{S}'^*_{BBi,m}$ als digitales, konjugiert komplexes Empfangssignal im Basisband, das durch Umsetzung des Sendesignals des i-ten Sendepfads (SP1-SP8, TRX_1-TRX_8) in das Basisband gebildet wird,
$\underline{S}^*_{BBi,n}$, als digitales, konjugiert komplexes Basisbandsignal des betrachteten Sendepfads (SP1-SP8, TRX_1-TRX_8) i, und mit

m als Korrelationsindex.

5. Verfahren nach Anspruch 4,

- bei dem durch Bestimmung der Lage des Korrelationsmaximums eine Gesamtlaufzeit ($\tau_{RX}+\tau_{TX,i}$) ermittelt wird, mit:

$\tau_{RX}$ als Signallaufzeit zwischen dem Koppler-Netzwerk (KN), der zur Signalauskopplung verwendet wird, und dem Korrelator (KOR) und mit
$\tau_{TX,i}$ als Signallaufzeit des Sendepfads (SP1-SP8, TRX_1-TRX_8), d.h. als Signallaufzeit zwischen den Anschlusspunkten eines zweiten Multiplexers (MUX2) einerseits und dem Koppler-Netzwerk (KN) andererseits, und

- bei dem eine auf einen Referenz-Signalpfad bezogene gesuchte Laufzeitdifferenz ($T_{TX,0}$ - $T_{TX,i}$) bestimmt wird.

6. Verfahren nach Anspruch 5, bei dem die Laufzeitdifferenz $T_{TX,0}$ - $T_{TX,i}$ des betrachteten Sendepfads (SP1-SP8, TRX_1-TRX_8) i in einen Laufzeitakkumulator eingespeist wird, dessen Ausgangssignal unmittelbar zur Korrektur der Signallaufzeit über das Laufzeitglied verwendet wird.

7. Verfahren nach Anspruch 4, bei dem die komplexe Amplitude unmittelbar bestimmt wird durch:

$$\max\{\underline{C}_i(m)\} = A_i \cdot A_{RX} \cdot e^{j(\varphi_i + \varphi_{RX})}$$

mit:

$A_i$ als Signalamplitude innerhalb des betrachteten Sendepfads (SP1-SP8, TRX_1-TRX_8),
$A_{RX}$ als Signalamplitude für den Empfangspfad (EP) bzw. für den Bereich zwischen den Auskoppelpunkten des Signals durch das Koppler-Netzwerk (KN) einerseits und dem Korrelator (KOR) andererseits,
$\varphi_i$ als Signalphase innerhalb des betrachteten Sendepfads (SP1-SP8, TRX_1-TRX_8), und mit
$\varphi_{RX}$ als Signalphase für den Empfangspfad (EP) bzw. für den Bereich zwischen den Auskoppelpunkten des Signals durch das Koppler-Netzwerk (KN) einerseits und dem Korrelator (KOR) andererseits.

8. Verfahren nach Anspruch 7,

- bei dem ein Amplitudenverhältnis und eine Phasendifferenz wie folgt berechnet wird:

$$\frac{\max\{\underline{C}_0(m)\}}{\max\{\underline{C}_i(m)\}} = \frac{A_0}{A_i} \cdot e^{j(\varphi_0 - \varphi_i)}$$

mit:

$A_0$ als Amplitudenwert des Referenz-Signalpfads,
$A_i$ als Amplitudenwert des betrachteten Signalpfads,
$\varphi_0$ als Phasenwert des Referenz-Signalpfads, und mit
$\varphi_i$ als Phasenwert des betrachteten Signalpfads,

- bei dem die Werte der berechneten Verhältnisse in einen Phasen-Akkumulator (PA1-PA8) eingespeist werden, dessen Ausgangssignal unmittelbar zur Korrektur der komplexen Amplitude über den Multiplikator des Sendepfads (SP1-SP8, TRX_1-TRX_8) verwendet wird.

9. Verfahren nach einem der vorhergehenden Ansprüche, bei dem die Sendepfade zur Ansteuerung von Einzelantennen (ANT0-ANT7) eines "Smart"-Antennensystem verwendet werden.

**10.** Anordnung zur Kalibrierung von Sendepfaden (SP1-SP8, TRX_1-TRX_8),

- bei der die Sendepfade zur Ansteuerung von Einzelantennen (ANT0-ANT7) eines Antennensystems vorgesehen sind
- bei der jeder Sendepfad Mittel zur Umwandlung eines zugeführten digitalen Basisband-Sendesignals in ein trägerfrequentes Sendesignal aufweist,
- bei der an jedem Sendepfad Mittel zur Auskopplung vorgesehen sind, mit dem aus dem Sendepfad dessen zugeordnetes trägerfrequentes Sendesignal anteilig ausgekoppelt wird,
- bei der das anteilig ausgekoppelte Sendesignal an einen Empfangspfad (EP) angeschaltet ist, der Mittel zur Umwandlung des Sendesignals in ein digitales Basisband-Empfangssignal aufweist,
- bei der der Empfangspfad (EP) ausgangsseitig mit einem Korrelator verbunden ist, der das Basisband-Empfangssignal mit dem Basisband-Sendesignal korreliert und aus der Korrelation ein auf einen Referenz-Sendepfad bezogenes Amplitudenverhältnis, eine Phasendifferenz und eine Laufzeitdifferenz ermittelt, und zur Bestimmung einer komplexen Amplitude am Korrelationsmaximum für den betrachteten Signalpfad ausgebildet ist,
- bei der der Sendepfad ein einstellbares Laufzeitglied aufweist, an den der Korrelator ausgangseitig anschaltbar ist, wobei die Laufzeitdifferenz zur Einstellung des Laufzeitglieds verwendet wird, und
- bei der der Sendepfad einen einstellbaren Multiplikator aufweist, an den der Korrelator ausgangseitig anschaltbar ist, wobei das Amplitudenverhältnis und die Phasendifferenz zur Einstellung des Multiplikators (M1-M8, MUL1, MUL2) verwendet werden.

**11.** Anordnung nach Anspruch 10,

- bei der jeder Sendepfad ausgangsseitig einen Koppler eines Koppler-Netzwerks (KN) beinhaltet, um das Sendesignal anteilig auszukoppeln, und
- bei der die Koppler des Koppler-Netzwerks (KN) mit einem ersten Multiplexer (MUX1) verbunden sind, der das anteilige Sendesignal eines ausgewählten Sendepfads (SP1-SP8, TRX_1-TRX_8) an einen Eingang des Empfangspfads (EP) weiterleitet.

**12.** Anordnung nach Anspruch 11 oder 12,

- bei der der Empfangspfad (EP) eine Einrichtung zur Umsetzung des trägerfrequenten Sendesignals in ein Basisbandsignal aufweist, und
- bei der der Empfangspfad (EP) einen Analog-DigitalWandler (ADC) zur Bildung des digitalen Basisband-Empfangssignals aufweist.

**13.** Anordnung nach einem der Ansprüche 10 bis 12,

- bei der der Korrelator zusätzlich eingangsseitig mit einem auswählbaren Sendepfad verbunden ist,
- bei der der Korrelator zur Durchführung einer komplexen Korrelation gemäß folgender Formel ausgebildet ist:

$$\underline{C}_i(m) = \frac{\sum_{n=0}^{N_{corr}-1} \underline{S}_{BB,i,n} \cdot \underline{S'}^{*}_{BB,i,m+T/T_{os} \cdot n}}{\sum_{n=0}^{N_{corr}-1} \underline{S}_{BB,i,n} \cdot \underline{S}^{*}_{BB,i,n}}$$

mit:

$N_{corr}$ als Korrelationslänge,
T als Bitdauer,
$T_{os}$ als Bitdauer des mit einem Offset behafteten Empfangssignals, (dieses Signal liegt im Allgemeinen als überabgetastetes Signal vor),
$\underline{S}_{BBi,n}$ als digitales Basisbandsignal eines betrachteten Sendepfads (SP1-SP8, TRX_1-TRX_8) i,
$\underline{S'}^{*}_{BBi,m}$ als digitales, konjugiert komplexes Empfangssignal im Basisband, das durch Umsetzung des Sendesignals des i-ten Sendepfads (SP1-SP8, TRX_1-TRX_8) in das Basisband gebildet wird,

$\underline{S}^{*}_{BBi,n}$ als digitales, konjugiert komplexes Basisbandsignal des betrachteten Sendepfads (SP1-SP8, TRX_1-TRX_8) i, und mit
m als Korrelationsindex,

- wobei durch Bestimmung der Lage des Korrelationsmaximums eine Gesamtlaufzeit ($\tau_{RX} + \tau_{TX,i}$) ermittelt wird, mit:

$\tau_{RX}$ als Signallaufzeit zwischen dem Koppler-Netzwerk (KN), der zur Signalauskopplung verwendet wird, und dem Korrelator (KOR), und mit
$\tau_{TX,i}$ als Signallaufzeit des Sendepfads (SP1-SP8, TRX_1-TRX_8), d.h. als Signallaufzeit zwischen den Anschlusspunkten eines zweiten Multiplexers (MUX2) einerseits und dem Koppler-Netzwerk (KN) andererseits,
und

- wobei eine auf einen Referenz-Signalpfad bezogene Laufzeitdifferenz ($\tau_{TX,0} - \tau_{TX,i}$) bestimmt wird.

**14.** Anordnung nach Anspruch 13, bei der der Korrelator ausgangsseitig über einen Laufzeitakkumulator an das Laufzeitglied des betrachteten Sendepfads (SP1-SP8, TRX_1-TRX_8) i anschaltbar ist, wobei der Laufzeitakkumulator aus der ihm zugeführten Laufzeitdifferenz $\tau_{TX,0} - T_{TX,i}$ ein Steuersignal (CNTRL) zur Einstellung des Laufzeitglieds bildet.

**15.** Anordnung nach Anspruch 13, bei der der Korrelator zur Bestimmung des Korrelationsmaximums für den betrachteten Signalpfad und der komplexen Amplitude gemäß folgender Formel ausgebildet ist:

$$\max\{\underline{C}_i(m)\} = A_i \cdot A_{RX} \cdot e^{j(\varphi_i + \varphi_{RX})}$$

mit:

$A_i$ als Signalamplitude innerhalb des betrachteten Sendepfads (SP1-SP8, TRX_1-TRX_8),
$A_{RX}$ als Signalamplitude für den Empfangspfad (EP) bzw. für den Bereich zwischen den Auskoppelpunkten des Signals durch das Koppler-Netzwerk (KN) einerseits und dem Korrelator (KOR) andererseits,
$\varphi_i$ als Signalphase innerhalb des betrachteten Sendepfads (SP1-SP8, TRX_1-TRX_8), und mit
$\varphi_{RX}$ als Signalphase für den Empfangspfad (EP) bzw. für den Bereich zwischen den Auskoppelpunkten des Signals durch das Koppler-Netzwerk (KN) einerseits und dem Korrelator (KOR) andererseits,
- wobei ein Amplituden- und ein Phasenverhältnis wie folgt berechnet wird:

$$\frac{\max\{\underline{C}_0(m)\}}{\max\{\underline{C}_i(m)\}} = \frac{A_0}{A_i} \cdot e^{j(\varphi_0 - \varphi_i)}$$

mit:

$A_0$ als Amplitudenwert des Referenz-Signalpfads,
$A_i$ als Amplitudenwert des betrachteten Signalpfads,
$\varphi_0$ als Phasenwert des Referenz-Signalpfads, und mit $\varphi_i$ als Phasenwert des betrachteten Signalpfads.

**16.** Anordnung nach Anspruch 15, bei der der Korrelator ausgangsseitig über einen Phasenakkumulator an den Multiplikator des betrachteten Sendepfads (SP1-SP8, TRX_1-TRX_8) i anschaltbar ist, wobei der Phasenakkumulator aus den ihm zugeführten Amplitudenverhältnis und der Phasendifferenz ein Steuersignal (CNTRL) zur Einstellung des Multiplikators (M1-M8, MUL1, MUL2) bildet.

**17.** Anordnung nach einem Ansprüche 10 bis 16, bei der das Antennensystem als "Smart"-Antennensystem ausgebildet ist, wobei die Sendepfade zur Anspeisung der Einzelantennen (ANT0-ANT7) des Antennensystems vorgesehen sind.

18. Anordnung nach einem Ansprüche 10 bis 16, bei der der Phasen- und/oder der Laufzeitakkumulator als Integrator ausgebildet ist.

**Claims**

1. Method for calibrating transmit paths (SP1-SP8, TRX_1-TRX_8) which are used for selecting individual antennas (ANTO-ANT7) of an antenna array,

  - wherein by each transmit path (SP1-SP8, TRX_1-TRX_8) a digital baseband transmit signal supplied is converted into a carrier-frequency transmit signal,
  - wherein, for calibrating, a single transmit path (SP1-SP8, TRX_1-TRX_8) is selected, the associated carrier-frequency transmit signal of which is proportionately extracted,
  - wherein the transmit signal proportionately extracted is converted into a digital baseband receive signal via a receive path (EP),
  - wherein the receive signal is correlated with the transmit signal in order to determine an amplitude ratio referred to a reference transmit path, a phase difference and a delay difference for the selected transmit path (SP1-SP8, TRX_1-TRX_8), a complex amplitude being calculated at the correlation peak for the selected signal path,
  - wherein, for calibrating, the delay difference is used for adjusting a delay element which is associated with the selected transmit path, and
  - wherein, for calibrating, the amplitude ratio and the phase difference is used for adjusting a multiplier (M1-M8, MUL1, MUL2) which is associated with the selected transmit path.

2. Method according to Claim 1,

  - wherein a coupler network (KN) is used for extracting proportionate transmit signals from all transmit paths (SP1-SP8, TRX_1-TRX_8), and
  - wherein a first multiplexer (MUX1) is used for selecting the transmit path (SP1-SP8, TRX_1-TRX_8), the first multiplexer (MUX1) forwarding the proportionate transmit signal of the selected transmit path (SP1-SP8, TRX_1-TRX_8) to the receive path (EP).

3. Method according to Claim 1 or 2, wherein the proportionate transmit signal of the selected transmit path (SP1-SP8, TRX_1-TRX_8) is converted to baseband and analogue/digital converted on the receive path (EP) in order to form the digital baseband receive signal.

4. Method according to one of the preceding claims, wherein a complex correlation of the transmitted baseband signal $\underline{S}_{BB,i}(nT)$ with the associated transmit signal $\underline{S}'_{BB,i}(nT_{OS})$ transformed back into the complex baseband is carried out in accordance with the following formula:

$$\underline{C}_i(m) = \frac{\sum_{n=0}^{N_{corr}-1} \underline{S}_{BB,i,n} \cdot \underline{S}'^{*}_{BB,i,m+T/T_{os}\cdot n}}{\sum_{n=0}^{N_{corr}-1} \underline{S}_{BB,i,n} \cdot \underline{S}^{*}_{BB,i,n}}$$

with:

  $N_{corr}$ as correlation length,
  $T$ as bit period,
  $T_{os}$ as bit period of the receive signal having an offset, (this signal is generally present as oversampled signal),
  $\underline{S}_{BBI,n}$ as digital baseband signal of a transmit path considered (SP1-SP8, TRX_1-TRX_8) i,
  $\underline{S}'^{*}_{BBi,m}$ as digital, conjugate complex receive signal in the baseband which is formed by converting the transmit signal of the $i^{th}$ transmit path (SP1-SP8, TRX_1-TRX_8) into the baseband,

$\underline{S}^*_{BBi,n}$ as digital, conjugate complex baseband signal of the transmit path considered (SP1-SP8, TRX_1-TRX_8) i, and with

m as correlation index.

5. Method according to Claim 4,

- wherein an overall delay ($\tau_{RX} + \tau_{TX,i}$) is determined by determining the position of the correlation peak, with:

$\tau_{RX}$ as signal delay between the coupler network (KN) which is used for the signal extraction, and the correlator (KOR), and with

$\tau_{TX,I}$ as signal delay of the transmit path (SP1-SP8, TRX_1-TRX_8), i.e. as signal delay between the connecting points of a second multiplexer (MUX2), on the one hand, and the coupler network (KN), on the other hand, and

- wherein a wanted delay difference ($\tau_{TX,0} - \tau_{TX,i}$), referred to a reference signal path, is determined.

6. Method according to Claim 5, wherein the delay difference $\tau_{TX,0} - \tau_{TX,I}$ of the signal path i considered (SP1-SP8, TRX_1-TRX_8) is fed into a delay accumulator, the output signal of which is directly used for correcting the signal delay via the delay element.

7. Method according to Claim 4, wherein the complex amplitude is directly determined by:

$$\max\{\underline{C}_i(m)\} = A_i \cdot A_{RX} \cdot e^{j(\varphi_i + \varphi_{RX})}$$

with:

$A_i$ as signal amplitude within the transmit path considered (SP1-SP8, TRX_1-TRX_8),
$A_{RX}$ as signal amplitude for the receive path (EP) or, respectively, for the area between the extracting points of the signal through the coupler network (KN), on the one hand, and the correlator (KOR), on the other hand,
$\varphi_I$ as signal phase within the transmit path considered (SP1-SP8, TRX_1-TRX_8), and with
($\varphi_{RX}$ as signal phase for the receive path (EP) or, respectively, for the area between the extracting points of the signal through the coupler network (KN), on the one hand, and the correlator (KOR), on the other hand.

8. Method according to Claim 7,

- wherein an amplitude ratio and a phase difference is calculated as follows:

$$\frac{\max\{\underline{C}_0(m)\}}{\max\{\underline{C}_i(m)\}} = \frac{A_0}{A_i} \cdot e^{j(\varphi_0 - \varphi_i)}$$

with:

$A_0$ as amplitude value of the reference signal path,
$A_i$ as amplitude value of the signal path considered,
$\varphi_0$ as phase value of the reference signal path, and with $\varphi_i$ as phase value of the signal path considered,

- wherein the values of the calculated ratios are fed into a phase accumulator (PA1-PA8), the output signal of which is directly used for correcting the complex amplitude via the multiplier of the transmit path (SP1-SP8, TRX_1-TRX_8).

9. Method according to one of the preceding claims, in which the transmit paths are used for selecting single antennas (ANTO-ANT7) of a "smart" antenna array.

**10.** Arrangement for calibrating transmit paths (SP1-SP8, TRX_1-TRX_8),

- wherein the transmit paths are provided for selecting single antennas (ANTO-ANT7) of an antenna array,
- wherein each transmit path has means for converting a digital baseband transmit signal supplied into a carrier-frequency transmit signal,
- wherein at each transmit path, means for extraction are provided by means of which its associated carrier-frequency transmit signal is proportionately extracted from the transmit path,
- wherein the transmit signal proportionately extracted is connected to a receive path (EP), which has means for converting the transmit signal into a digital baseband receive signal,
- wherein the receive path (EP) is connected at its output end to a correlator which correlates the baseband receive signal with the baseband transmit signal and determines from the correlation an amplitude ratio referred to a reference receive path, a phase difference and a delay difference, and is constructed for determining a complex amplitude at the correlation peak for the signal path considered,
- wherein the transmit path has an adjustable delay element which can be connected at its output to the correlator, the delay difference being used for adjusting the delay element, and
- wherein the transmit path has an adjustable multiplier to which the correlator can be connected at its output, the amplitude ratio and the phase difference being used for adjusting the multiplier (M1-M8, MUL1, MUL2).

**11.** Arrangement according to Claim 10,

- wherein each transmit path contains at its output a coupler of a coupler network (KN) in order to proportionately extract the transmit signal, and
- wherein the coupler of the coupler network (KN) is connected to a first multiplexer (MUX1) which forwards the proportionate transmit signal of a selected transmit path (SP1-SP8, TRX_1-TRX_8) to an input of the receive path (EP).

**12.** Arrangement according to Claim 11 or 12,

- wherein the receive path (EP) has a facility for converting the carrier-frequency transmit signal into a baseband signal, and
- wherein the receive path (EP) has an analogue/digital converter (ADC) for forming the digital baseband receive signal.

**13.** Arrangement according to one of Claims 10 to 12,

- wherein the correlator is additionally connected at its input end to a selectable transmit path,
- wherein the correlator is constructed for performing a complex correlation according to the following formula:

$$\underline{C}_i(m) = \frac{\sum_{n=0}^{N_{corr}-1} \underline{S}_{BB,i,n} \cdot \underline{S}'^{*}_{BB,i,m+T/T_{os}\cdot n}}{\sum_{n=0}^{N_{corr}-1} \underline{S}_{BB,i,n} \cdot \underline{S}^{*}_{BB,i,n}}$$

with:

$N_{corr}$ as correlation length,
$T$ as bit period,
$T_{os}$ as bit period of the receive signal having an offset, (this signal is generally present as oversampled signal),
$\underline{S}_{BBi,n}$ as digital baseband signal of a transmit path considered (SP1-SP8, TRX_1-TRX_8) i,
$\underline{S}'^{*}_{BBi,m}$ as digital, conjugate complex receive signal in the baseband which is formed by converting the transmit signal of the ith transmit path (SP1-SP8, TRX_1-TRX_8) into the baseband,
$\underline{S}^{*}_{BBi,n}$ as digital, conjugate complex baseband signal of the transmit path considered (SP1-SP8, TRX_1-TRX_8) i, and with
$m$ as correlation index,

- wherein, by determining the position of the correlation peak, an overall delay ($\tau_{RX} + \tau_{TX,i}$) is determined, with: $\tau_{RX}$ as signal delay between the coupler network (KN) which is used for signal extraction, and the correlator (KOR), and with $\tau_{TX,i}$ as signal delay of the transmit path (SP1-SP8, TRX_1-TRX_8), i.e. as signal delay between the connecting points of a second multiplexer (MUX2), on the one hand, and the coupler network (KN), on the other hand, and - wherein a delay difference ($\tau_{TX,0} - \tau_{TX,i}$) referred to a reference signal path is determined.

14. Arrangement according to Claim 13, wherein the correlator can be connected at its output end to the delay element of the transmit path considered (SP1-SP8, TRX_1-TRX_8) i via a delay accumulator, the delay accumulator forming a control signal (CNTRL) for adjusting the delay element from the delay difference $\tau_{TX,0} - \tau_{TX,i}$ supplied to it.

15. Arrangement according to Claim 13, wherein the correlator, for determining the correlation peak for the signal path considered and the complex amplitude, is constructed in accordance with the following formula:

$$\max\{\underline{C}_i(m)\} = A_i \cdot A_{RX} \cdot e^{j(\varphi_i + \varphi_{RX})}$$

with:

$A_i$ as signal amplitude within the transmit path considered (SP1-SP8, TRX_1-TRX_8),
$A_{RX}$ as signal amplitude for the receive path (EP) or, respectively, for the area between the extracting points of the signal through the coupler network (KN), on the one hand, and the correlator (KOR), on the other hand,
$\varphi_I$ as signal phase within the transmit path considered (SP1-SP8, TRX_1-TRX_8), and with
$\varphi_{RX}$ as signal phase for the receive path (EP) or, respectively, for the area between the extracting points of the signal through the coupler network (KN), on the one hand, and the correlator (KOR), on the other hand,
- an amplitude ratio and a phase ratio being calculated as follows:

$$\frac{\max\{\underline{C}_0(m)\}}{\max\{\underline{C}_i(m)\}} = \frac{A_0}{A_i} \cdot e^{j(\varphi_0 - \varphi_i)}$$

with
$A_0$ as amplitude value of the reference signal path,
$A_i$ as amplitude value of the signal path considered,
$\varphi_0$ as phase value of the reference signal path, and with
$\varphi_i$ as phase value of the signal path considered.

16. Arrangement according to Claim 15, wherein the correlator can be connected at its output end to the multiplier of the signal path considered (SP1-SP8, TRX_1-TRX_8) i via a phase accumulator, the phase accumulator forming the control signal (CNTRL) for adjusting the multiplier (M1-M8, MUL1, MUL2) from the amplitude ratio supplied to it and the phase difference.

17. Arrangement according to one of Claims 10 to 16, wherein the antenna array is constructed as "smart" antenna array, the transmit paths being provided for feeding the individual antennas (ANTO-ANT7) of the antenna array.

18. Arrangement according to one of Claims 10 to 16, wherein the phase accumulator and/or the delay accumulator is constructed as integrator.

**Revendications**

1. Procédé pour étalonner des chemins d'émission (SP1-SP8, TRX_1-TRX_8) qui sont utilisés pour exciter des antennes individuelles (ANTO-ANT7) d'un système d'antennes, dans lequel :

- un signal d'émission numérique de bande de base amené est converti, dans chaque chemin d'émission (SP1-SP8, TRX_1-TRX_8), en un signal d'émission de fréquence porteuse ;
- est sélectionné, pour l'étalonnage, un chemin d'émission individuel (SP1-SP8, TRX_1-TRX_8) dont le signal d'émission de fréquence porteuse associé est découplé proportionnellement ;
- le signal d'émission découplé proportionnellement est converti, via un chemin de réception (EP), en un signal de réception numérique de bande de base ;
- le signal de réception est corrélé avec le signal d'émission pour déterminer, pour le chemin d'émission sélectionné (SP1-SP8, TRX_1-TRX_8), un rapport d'amplitude se référant au chemin d'émission de référence, une différence de phase et une différence de temps de propagation, une amplitude complexe étant calculée au maximum de corrélation pour le chemin de signal sélectionné ;
- on utilise, pour l'étalonnage, la différence de temps de propagation pour le réglage d'un élément de temps de propagation qui est associé au chemin d'émission sélectionné ; et
- on utilise, pour l'étalonnage, le rapport d'amplitude et la différence de phase pour le réglage d'un multiplicateur (M1-M8, MUL1, MUL2) qui est associé au chemin d'émission sélectionné.

2. Procédé selon la revendication 1, dans lequel :

   - un réseau coupleur (KN) est utilisé pour découpler de tous les chemins d'émission (SP1-SP8, TRX_1-TRX_8) des signaux d'émission proportionnels ; et
   - un premier multiplexeur (MUX1) est utilisé pour sélectionner le chemin d'émission (SP1-SP8, TRX_1-TRX_8), le premier multiplexeur (MUX1) retransmettant au chemin de réception (EP) le signal d'émission proportionnel du chemin d'émission sélectionné (SP1-SP8, TRX_1-TRX_8).

3. Procédé selon la revendication 1 ou 2, dans lequel le signal d'émission proportionnel du chemin d'émission sélectionné (SP1-SP8, TRX_1-TRX_8), sur le chemin de réception, est transposé dans la bande de base et fait l'objet d'une conversion analogique-numérique pour constituer le signal de réception numérique de bande de base.

4. Procédé selon l'une des revendications précédentes, dans lequel une corrélation complexe du signal de bande de base émis $\underline{S}_{BB,i}(nT)$ avec le signal d'émission associé $S'_{BB,i}(nT_{OS})$ retransformé dans la bande de base complexe est exécutée selon la formule suivante :

$$\underline{C}_i(m) = \frac{\sum_{n=0}^{N_{corr}-1} \underline{S}_{BB,i,n} \cdot \underline{S'}^*_{BB,i,m+T/T_{OS}\cdot n}}{\sum_{n=0}^{N_{corr}-1} \underline{S}_{BB,i,n} \cdot \underline{S}^*_{BB,i,n}}$$

$N_{corr}$ étant la longueur de corrélation ;
T étant la durée binaire ;
$T_{os}$ étant la durée binaire du signal de réception avec décalage (ce signal se présente généralement sous la forme d'un signal suréchantillonné) ;
$\underline{S}_{BBi,n}$ étant un signal numérique de bande de base d'un chemin d'émission considéré (SP1-SP8, TRX_1-TRX_8) i ;
$\underline{S'}^*_{BBi,m}$ étant un signal de réception numérique conjugué complexe dans la bande de base qui est formé par transposition du signal d'émission du $i^{ème}$ chemin d'émission (SP1-SP8, TRX_1-TRX_8) dans la bande de base ;
$\underline{S}^*_{BBi,n}$ étant un signal numérique de bande de base conjugué complexe du chemin d'émission considéré (SP1-SP8, TRX_1-TRX_8) i ; et
m étant un indice de corrélation.

5. Procédé selon la revendication 4, dans lequel :

   - un temps de propagation total ($\tau_{RX} + \tau_{TX,i}$) est établi par détermination de la position du maximum de corrélation,

   $\tau_{RX}$ étant le temps de propagation du signal entre le réseau coupleur (KN) qui est utilisé pour le découplage du signal et le corrélateur (KOR) ; et
   $\tau_{TX,i}$ étant le temps de propagation du signal du chemin d'émission (SP1-SP8, TRX_1-TRX_8), c'est-à-dire le temps de propagation du signal entre les points de connexion d'un deuxième multiplexeur (MUX2), d'une part, et le réseau coupleur (KN), d'autre part ; et

- une différence de temps de propagation cherchée ($\tau_{TX,0}$ - $\tau_{TX,i}$) qui se réfère à un chemin de signal de référence étant déterminée.

**6.** Procédé selon la revendication 5, dans lequel la différence de temps de propagation ($\tau_{TX,0}$ - $\tau_{TX,i}$) du chemin d'émission considéré (SP1-SP8, TRX_1-TRX_8) i est injectée dans un accumulateur de temps de propagation dont le signal de sortie est utilisé directement pour corriger le temps de propagation du signal via l'élément de temps de propagation.

**7.** Procédé selon la revendication 4, dans lequel l'amplitude complexe est déterminée directement par :

$$\max\{\underline{C}_i(m)\} = A_i \cdot A_{RX} \cdot e^{j(\varphi_i + \varphi_{RX})}$$

$A_i$ étant l'amplitude du signal dans les limites du chemin d'émission considéré (SP1-SP8, TRX_1-TRX_8) ;
$A_{RX}$ étant l'amplitude du signal pour le chemin de réception (EP) resp. pour la zone comprise entre les points de découplage du signal par le réseau coupleur (KN), d'une part, et le corrélateur (KOR), d'autre part ;
$\varphi_i$ étant une phase de signal dans les limites du chemin d'émission considéré (SP1-SP8, TRX_1-TRX_8) ; et
$\varphi_{RX}$ étant une phase de signal pour le chemin de réception (EP) resp. pour la zone comprise entre les points de découplage du signal par le réseau coupleur (KN), d'une part, et le corrélateur (KOR), d'autre part.

**8.** Procédé selon la revendication 7, dans lequel un rapport d'amplitude et une différence de phase sont calculés comme suit :

$$\frac{\max\{\underline{C}_0(m)\}}{\max\{\underline{C}_i(m)\}} = \frac{A_0}{A_i} \cdot e^{j(\varphi_0 - \varphi_i)}$$

$A_0$ étant la valeur de l'amplitude du chemin du signal de référence ;
$A_i$ étant la valeur de l'amplitude du chemin de signal considéré ;
$\varphi_0$ étant la valeur de la phase du chemin du signal de référence ; et
$\varphi_i$ étant la valeur de la phase du chemin de signal considéré ;
- dans lequel les valeurs des rapports calculés sont injectées dans un accumulateur de phases (PA1-PA8) dont le signal de sortie est utilisé directement pour corriger l'amplitude complexe via le multiplicateur du chemin d'émission (SP1-SP8, TRX_1-TRX_8).

**9.** Procédé selon l'une des revendications précédentes, dans lequel les chemins d'émission sont utilisés pour exciter des antennes individuelles (ANTO-ANT7) d'un système d'antennes intelligentes.

**10.** Dispositif pour étalonner des chemins d'émission (SP1-SP8, TRX_1-TRX_8), dans lequel :

- les chemins d'émission sont prévus pour exciter des antennes individuelles (ANTO-ANT7) d'un système d'antennes ;
- chaque chemin d'émission comporte des moyens pour convertir un signal d'émission numérique de bande de base amené en un signal d'émission de fréquence porteuse ;
- au niveau de chaque chemin d'émission sont prévus des moyens de découplage permettant le découplage proportionnel, hors du chemin d'émission, du signal d'émission de fréquence porteuse qui y est associé ;
- le signal d'émission découplé proportionnellement est connecté à un chemin de réception (EP) qui comporte des moyens pour la conversion du signal d'émission en un signal de réception numérique de bande de base ;
- le chemin de réception (EP) est relié, côté sortie, à un corrélateur qui corrèle le signal de réception de bande de base avec le signal d'émission de bande de base et détermine, sur la base de la corrélation, un rapport d'amplitude se référant à un chemin d'émission de référence, une différence de phase et une différence de temps de propagation et est réalisé pour déterminer une amplitude complexe au maximum de corrélation pour le chemin de signal considéré ;

- le chemin d'émission comporte un élément de temps de propagation réglable auquel le corrélateur peut être connecté côté sortie, la différence de temps de propagation étant utilisée pour le réglage de l'élément de temps de propagation ; et

- le chemin d'émission comporte un multiplicateur réglable auquel le corrélateur peut être connecté côté sortie, le rapport d'amplitude et la différence de phase étant utilisés pour le réglage du multiplicateur (M1-M8, MUL1, MUL2).

**11.** Dispositif selon la revendication 10, dans lequel :

- chaque chemin d'émission comporte, côté sortie, un coupleur d'un réseau coupleur (KN) pour découpler proportionnellement le signal d'émission ; et

- les coupleurs du réseau coupleur (KN) sont reliés à un premier multiplexeur (MUX1) qui retransmet sur l'entrée du chemin de réception (EP) le signal d'émission proportionnel d'un chemin d'émission sélectionné (SP1-SP8, TRX_1-TRX_8).

**12.** Dispositif selon la revendication 11 ou 12, dans lequel :

- le chemin de réception (EP) comporte un dispositif pour convertir le signal d'émission de fréquence porteuse en un signal de bande de base ; et

- le chemin de réception (EP) comporte un convertisseur analogique-numérique (ADC) pour former le signal de réception numérique de bande de base.

**13.** Dispositif selon l'une des revendications 10 à 12, dans lequel :

- le corrélateur est additionnellement relié, côté entrée, à un chemin d'émission sélectionnable ;

- le corrélateur est réalisé pour exécuter une corrélation complexe selon la formule suivante :

$$\underline{C}_i(m) = \frac{\sum\limits_{n=0}^{N_{corr}-1} \underline{S}_{BB,i,n} \cdot \underline{S'}^{*}_{BB,i,m+T/T_{os} \cdot n}}{\sum\limits_{n=0}^{N_{corr}-1} \underline{S}_{BB,i,n} \cdot \underline{S}^{*}_{BB,i,n}}$$

$N_{Corr}$ étant la longueur de corrélation ;

T étant la durée binaire ;

$T_{os}$ étant la durée binaire du signal de réception avec décalage (ce signal se présente généralement sous la forme d'un signal suréchantillonné) ;

$\underline{S}_{BBi,n}$ étant un signal numérique de bande de base d'un chemin d'émission considéré (SP1-SP8, TRX_1-TRX_8) i ;

$\underline{S'}^{*}_{BBi,m}$ étant un signal de réception numérique conjugué complexe dans la bande de base qui est formé par transposition du signal d'émission du $i^{\text{ème}}$ chemin d'émission (SP1-SP8, TRX_1-TRX_8) dans la bande de base ;

$\underline{S}^{*}_{BBi,n}$ étant un signal numérique de bande de base conjugué complexe du chemin d'émission considéré (SP1-SP8, TRX_1-TRX_8) i ; et

m étant un indice de corrélation.

- un temps de propagation total ($\tau_{RX} + \tau_{Tx,i}$) étant établi par détermination de la position du maximum de corrélation,

$\tau_{RX}$ étant le temps de propagation du signal entre le réseau coupleur (KN) qui est utilisé pour le découplage du signal et le corrélateur (KOR) ; et

$\tau_{TX,i}$ étant le temps de propagation du signal du chemin d'émission (SP1SP8, TRX_1-TRX_8), c'est-à-dire le temps de propagation du signal entre les points de connexion d'un deuxième multiplexeur (MUX2), d'une part, et le réseau coupleur (KN), d'autre part ; et

- une différence de temps de propagation ($\tau_{TX,0} - \tau_{TX,i}$) qui se réfère à un chemin de signal de référence étant déterminée.

**14.** Dispositif selon la revendication 13, dans lequel le corrélateur, côté sortie, peut être connecté à l'élément de temps de propagation du chemin d'émission considéré (SP1SP8, TRX_1-TRX_8) i via un accumulateur de temps de propagation, l'accumulateur de temps de propagation formant, à partir de la différence de temps de propagation ($\tau_{TX,0}$ - $\tau_{TX,i}$) qui lui a été amenée, un signal de commande (CNTRL) pour le réglage de l'élément de temps de propagation.

**15.** Dispositif selon la revendication 13, dans lequel le corrélateur pour déterminer l'amplitude complexe et le maximum de corrélation pour le chemin de signal considéré est réalisé selon la formule suivante :

$$\max\{\underline{C}_i(m)\} = A_i \cdot A_{RX} \cdot e^{j(\varphi_i + \varphi_{RX})}$$

$A_i$ étant l'amplitude du signal dans les limites du chemin d'émission considéré (SP1-SP8, TRX_1-TRX_8) ;
$A_{RX}$ étant l'amplitude du signal pour le chemin de réception (EP) resp. pour la zone comprise entre les points de découplage du signal par le réseau coupleur (KN), d'une part, et le corrélateur (KOR), d'autre part ;
$\varphi_i$ étant une phase de signal dans les limites du chemin d'émission considéré (SP1-SP8, TRX_1-TRX_8) ; et
$\varphi_{RX}$ étant une phase de signal pour le chemin de réception (EP) resp. pour la zone comprise entre les points de découplage du signal par le réseau coupleur (KN), d'une part, et le corrélateur (KOR), d'autre part ;
- un rapport d'amplitude et un rapport de phase étant calculés comme suit :

$$\frac{\max\{\underline{C}_0(m)\}}{\max\{\underline{C}_i(m)\}} = \frac{A_0}{A_i} \cdot e^{j(\varphi_0 - \varphi_i)}$$

$A_0$ étant la valeur de l'amplitude du chemin du signal de référence ;
$A_i$ étant la valeur de l'amplitude du chemin de signal considéré ;
$\varphi_0$ étant la valeur de la phase du chemin du signal de référence ; et
$\varphi_i$ étant la valeur de la phase du chemin de signal considéré ;

**16.** Dispositif selon la revendication 15, dans lequel le corrélateur, côté sortie, peut être connecté au multiplicateur du chemin d'émission considéré (SP1-SP8, TRX_1-TRX_8) i via un accumulateur de phases, l'accumulateur de phases formant, à partir du rapport d'amplitude et de la différence de phase qui lui sont amenés, un signal de commande (CNTRL) pour le réglage du multiplicateur (M1-M8, MUL1, MUL2).

**17.** Dispositif selon l'une des revendications 10 à 16, dans lequel le système d'antennes se présente sous la forme d'un système d'antennes intelligentes, les chemins d'émission étant prévus pour alimenter les antennes individuelles (ANTO-ANT7) du système d'antennes.

**18.** Dispositif selon l'une des revendications 10 à 16, dans lequel l'accumulateur de phases et/ou l'accumulateur de temps de propagation se présentent sous la forme d'un intégrateur.

## FIG 1

$$\underline{S}_{RF,i}(t) = \underline{S}_{BB,i}(t - \tau_{TX,i}(t)) \cdot A_i(t) \cdot e^{j[\omega_c t + \varphi_i(t)]}$$
$$(i = 0, \ldots, n_{Ant})$$

## FIG 2

Laufzeit-Akkumulator

MUL1

$$\tau_{corr}(nT) \leftarrow \quad \oplus \leftarrow \otimes \leftarrow \tau_{TX,0}(nT) - \tau_{TX,i}(nT)$$

VZ1

AD1

$z^{-1}$

$\tau_{corr}((n-1)T)$

$\alpha$

## FIG 3

Phasen-Akkumulator

MUL2

$$A_{corr}(nT) \cdot e^{j\varphi_{corr}(nT)} \leftarrow \boxed{exp(...)} \leftarrow \oplus \leftarrow \otimes \leftarrow \ln\left[\frac{A_0(nT)}{A_i(nT)}\right] + j(\varphi_0(nT) - \varphi_i(nT))$$

VZ2

AD2

$z^{-1}$

$\alpha$

$$\ln\left[A_{corr}((n-1)T) \cdot e^{j\varphi_{corr}((n-1)T)}\right]$$

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1003310 A1

- EP 1178562 A1

**In der Beschreibung aufgeführte Nicht-Patentliteratur**

- **NISHIMORI K et al.** A new calibration method of adaptive array for TDD systems. *ANTENNAS AND PROPAGATION SOCIETY, 1999. IEEE INTERNATIONAL SYMPOSIUM 1999 ORLANDO,* 11. Juli 1999, vol. 2, ISBN 0-7803-5639-X, 1444-1447